(19) Europäisches Patentamt / European Patent Office / Office européen des brevets

(11) **EP 3 256 822 B1**

(12) **EUROPÄISCHE PATENTSCHRIFT**

(45) Veröffentlichungstag und Bekanntmachung des Hinweises auf die Patenterteilung:
**16.09.2020   Patentblatt 2020/38**

(51) Int Cl.:
*G01F 23/296* *(2006.01)*        *G01F 1/84* *(2006.01)*
*G01N 9/00* *(2006.01)*          *G01N 11/16* *(2006.01)*
*G01N 29/02* *(2006.01)*         *G01N 29/024* *(2006.01)*

(21) Anmeldenummer: **16703740.7**

(22) Anmeldetag: **27.01.2016**

(86) Internationale Anmeldenummer:
**PCT/EP2016/051707**

(87) Internationale Veröffentlichungsnummer:
**WO 2016/128217 (18.08.2016 Gazette 2016/33)**

(54) **VORRICHTUNG ZUR BESTIMMUNG UND/ODER ÜBERWACHUNG ZUMINDEST EINER PROZESSGRÖSSE EINES MEDIUMS UND ENTSPRECHENDES VERFAHREN**

DEVICE FOR DETERMINING AND/OR MONITORING AT LEAST ONE PROCESS VARIABLE FOR A MEDIUM AND CORRESPONDING METHOD

DISPOSITIF POUR DÉTERMINER ET/OU SURVEILLER AU MOINS UNE GRANDEUR DE PROCESSUS D'UN MILIEU ET PROCÉDÉ CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2015   DE 102015101891**

(43) Veröffentlichungstag der Anmeldung:
**20.12.2017   Patentblatt 2017/51**

(73) Patentinhaber: **Endress+Hauser SE+Co. KG**
**79689 Maulburg (DE)**

(72) Erfinder:
• **D'ANGELICO, Sascha**
  **79595 Rümmingen (DE)**
• **SCHMITT, Christoph**
  **79650 Schopfheim (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
DE-A1-102004 050 494        DE-A1-102011 088 351
US-A- 4 420 983             US-A- 5 373 745

**Beschreibung**

Die Erfindung betrifft eine Vorrichtung zur Bestimmung und/oder Überwachung zumindest einer Prozessgröße eines Mediums zumindest mit einer Elektronikeinheit und einer Sensoreinheit sowie ein Verfahren zum Betreiben der Vorrichtung. Das Medium befindet sich beispielsweise in einem Behälter, einem Tank, oder auch in einer Rohrleitung.

In der Prozess- und/oder Automatisierungstechnik werden viele unterschiedliche Feldgeräte zur Bestimmung und/oder Überwachung zumindest einer Prozessgröße, insbesondere einer physikalischen oder chemischen Prozessgröße, eingesetzt. Dabei handelt es sich beispielsweise um Füllstandsmessgeräte, Durchflussmessgeräte, Druck- und Temperaturmessgeräte, pH-Redoxpotentialmessgeräte, Leitfähigkeitsmessgeräte, usw., welche die entsprechenden Prozessgrößen Füllstand, Durchfluss, Druck, Temperatur, pH-Wert bzw. Leitfähigkeit erfassen. Ein Feldgerät umfasst typischerweise zumindest eine zumindest teilweise und zumindest zeitweise mit dem Prozess in Berührung kommende Sensoreinheit und eine Elektronikeinheit, welche beispielsweise der Signalerfassung, -auswertung und/oder -speisung dient. Als Feldgeräte werden im Rahmen der vorliegenden Anmeldung im Prinzip alle Messgeräte bezeichnet, die prozessnah eingesetzt werden und die prozessrelevante Informationen liefern oder verarbeiten, also auch Remote I/Os, Funkadapter bzw. allgemein elektronische Komponenten, die auf der Feldebene angeordnet sind. Eine Vielzahl solcher Feldgeräte wird von der Firma Endress + Hauser hergestellt und vertrieben. Zur Erfassung der jeweiligen Prozessgrößen werden jeweils viele verschiedene Messprinzipien eingesetzt, welche im Prinzip alle aus einer Vielzahl von Veröffentlichungen bekannt sind. Auf jedes Feldgerät, für welches die erfindungsgemäße Lösung zutrifft, gesondert und detailliert einzugehen würde den Rahmen der vorliegenden Anmeldung entsprechend sprengen. Deshalb beschränkt sich der Einfachheit halber die nachfolgende Beschreibung auf Füllstandsmessgeräte mit einer schwingfähigen Einheit, wobei an geeigneten Stellen auf andere mögliche Anwendungen der erfindungsgemäßen Lösung verwiesen wird.

Solche, auch als vibronische Sensoren bezeichnete Feldgeräte, weisen insbesondere im Falle von Füllstandsmessgeräten beispielsweise eine Schwinggabel, einen Einstab oder eine Membran als mechanisch schwingfähige Einheit auf. Diese wird im Betrieb mittels einer Antriebs-/Empfangseinheit, üblicherweise in Form einer elektromechanischen Wandlereinheit zu mechanischen Schwingungen angeregt, welche wiederum beispielsweise ein piezoelektrischer Antrieb oder ein elektromagnetischer Antrieb sein kann. Im Falle von Durchflussmessgeräten mit zumindest einer schwingfähigen Einheit kann diese aber auch als schwingfähiges Rohr ausgebildet sein, welches von dem jeweiligen Medium durchflossen wird, wie beispielsweise in einem nach dem Coriolis-Prinzip arbeitenden Messgerät.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Grunde bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Zur Anregung der mechanisch schwingfähigen Einheit sind unterschiedlichste, sowohl analoge als auch digitale Verfahren entwickelt worden. In vielen Fällen ist die Antriebs-/Empfangseinheit Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung der Verstärkungsfaktor $\geq 1$, und die Schwingkreisbedingung, gemäß welcher alle im Schwingkreis auftretenden Phasen ein Vielfaches von 360° ergeben, erfüllt sein.

DE 10 2004 050494 A1 offenbart einen vibronischen Sensor zur Bestimmung und/oder Überwachung einer Prozessgröße eines Mediums. US 5 373 745 A offenbart ein nach dem Coriolis-Messprinzip arbeitendes Durchflussmessgerät.

Zur Erfüllung der Schwingkreisbedingung muss eine bestimmte Phasenverschiebung zwischen dem Anregesignal und dem Empfangssignal gewährleistet sein. Hierfür sind unterschiedlichste Lösungen bekannt geworden. Prinzipiell kann die Einstellung der Phasenverschiebung beispielsweise durch Verwendung eines geeigneten Filters vorgenommen werden, oder auch mittels eines Regelkreises auf eine vorgebbare Phasenverschiebung, den Sollwert, geregelt werden. Aus der DE102006034105A1 ist beispielsweise bekannt geworden, einen einstellbaren Phasenschieber zu verwenden. Die zusätzliche Integration eines Verstärkers mit einstellbarem Verstärkungsfaktor zur zusätzlichen Regelung der Schwingungsamplitude wurde dagegen in der DE102007013557A1 beschrieben. Die DE102005015547A1 schlägt die Verwendung eines Allpass vor. Die Einstellung der Phasenverschiebung ist außerdem mittels eines sogenannten Frequenzsuchlaufs möglich, wie beispielsweise in der der DE102009026685A1, DE102009028022A1, und DE102010030982A1 offenbart. Die Phasenverschiebung kann aber auch mittels einer Phasenregelschleife (engl. Phase-Locked-Loop, PLL) auf einen vorgebbaren Wert geregelt werden. Ein hierauf basierendes Anregungsverfahren ist Gegenstand der DE00102010030982A1.

Sowohl das Anregesignal als auch das Empfangssignal sind charakterisiert durch ihre Frequenz, Amplitude und/oder Phase. Änderungen in diesen Größen werden dann üblicherweise zur Bestimmung der jeweiligen Prozessgröße herangezogen, wie beispielsweise ein vorgegebener Füllstandes eines Mediums in einem Behälter, oder auch die Dichte und/oder Viskosität eines Mediums oder im Falle eines Durchflussmessgeräts der Durchfluss eines Mediums durch ein Rohr. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden.

Die Dichte und/oder Viskosität wiederum lassen sich mit einem derartigen Messgerät nur ermitteln, wenn die schwingfähige Einheit vom Medium bedeckt ist. Aus der DE10050299A1, der DE102006033819A1 und der der DE102007043811A1 ist bekannt geworden, die Viskosität eines Mediums anhand der Frequenz-Phase-Kurve ($\Phi$=g(f)) zu bestimmen. Dieses Vorgehen basiert auf der Abhängigkeit der Dämpfung der schwingfähigen Einheit von der Viskosität des jeweiligen Mediums. Um den Einfluss der Dichte auf die Messung zu eliminieren, wird die Viskosität anhand einer durch zwei unterschiedliche Werte für die Phase verursachten Frequenzänderung bestimmt, also mittels einer Relativmessung.

Zur Bestimmung und/oder Überwachung der Dichte eines Mediums wird hingegen gemäß der DE10057974A1 der Einfluss von zumindest einer Störgröße, beispielswese der Viskosität, auf die Schwingungsfrequenz der mechanisch schwingfähigen Einheit ermittelt und kompensiert. In der DE102006033819A1 ist ferner beschrieben, eine vorgebbare Phasenverschiebung zwischen dem Anregesignal und dem Empfangssignal einzustellen, bei welcher Auswirkungen von Änderungen der Viskosität des Mediums auf die mechanischen Schwingungen der mechanisch schwingfähigen Einheit vernachlässigbar sind. Bei dieser Phasenverschiebung lässt sich eine empirische Formel zur Bestimmung der Dichte aufstellen.

Um mit einem bestimmten Feldgerät unterschiedliche Prozessgrößen zu erfassen, müssen also jeweils unterschiedliche Ausgestaltungen und Verfahren zum Betreiben dieses Feldgeräts angewendet werden. Selbst wenn mehrere Prozessgrößen mittels eines Feldgeräts bestimmbar sind, muss in vielen Fällen die Bestimmung einer ersten Prozessgröße unterbrochen werden, um eine zweite Prozessgröße bestimmen zu können. Es wäre jedoch wünschenswert, wenn mittels eines Feldgeräts mehrere Prozessgrößen gleichzeitig und kontinuierlich ohne wechselseitige Beeinflussung bestimmbar wären.

Deshalb liegt der vorliegenden Erfindung die Aufgabe zugrunde, eine Vorrichtung sowie ein Verfahren zum Betreiben der Vorrichtung zur Bestimmung und/oder Überwachung zumindest einer Prozessgröße anzugeben, mittels welcher/welchem sich zumindest eine weitere Information, z. B. eine weitere physikalische oder chemische Größe oder Prozessgröße ermitteln lässt.

Diese Aufgabe wird erfindungsgemäß gelöst durch eine Vorrichtung zur Bestimmung und/oder Überwachung zumindest einer ersten Prozessgröße eines Mediums zumindest mit einer Elektronikeinheit und einer Sensoreinheit, wobei die Elektronikeinheit dazu ausgestaltet ist, die Sensoreinheit mit einem Anregesignal zu beaufschlagen, welches zusammengesetzt ist aus einem Anrege-Trägersignal mit einer Anrege-Trägerfrequenz und einem Anrege-Modulationssignal mit einer Anrege-Modulationsfrequenz und ein Empfangssignal von der Sensoreinheit zu empfangen, welches zusammengesetzt ist aus einem Empfangs-Trägersignal und einem Empfangs-Modulationssignal, und wobei die Elektronikeinheit dazu ausgestaltet ist, aus der Phasenverschiebung zwischen dem Anrege-Modulationssignal und dem Empfangs-Modulationssignal zumindest die erste Prozessgröße zu bestimmen. Da das Anregesignal aus einem Anrege-Trägersignal und einem Anrege-Modulationssignal zusammengesetzt, können unabhängig voneinander das Empfangs-Trägersignal und das Empfangs-Modulationssignal ausgewertet werden. Somit sind mehrere Kanäle zur Auswertung des von der Sensoreinheit empfangenen Empfangssignals mittels eines Feldgeräts möglich. Die Modulation, erfindungsgemäß eine Amplitudenmodulation, beeinflusst eine Auswertung des Trägersignals nicht. Vorteilhaft ist die Anrege-Modulationsfrequenz klein gegen die Anrege-Trägerfrequenz.

Erfindungsgemäß ist die Elektronikeinheit dazu ausgestaltet, aus der Phasenverschiebung zwischen dem Anrege-Trägersignal und dem Empfangs-Trägersignal zumindest eine zweite Prozessgröße zu bestimmen. Es versteht sich jedoch von selbst, dass auch mehr als zwei Prozessgrößen bestimmbar sind. Eine erste Prozessgröße wird also aus dem Empfangs-Modulationssignal bzw. aus der Phasenverschiebung zwischen dem Anrege-Modulationssignal und dem Empfangs-Modulationssignal berechnet, und eine zweite Prozessgröße wird aus dem Empfangs-Trägersignal berechnet. Die zweite Prozessgröße kann dann beispielsweise aus der Anrege-Trägerfrequenz, wie unter anderem bei der Bestimmung eines Füllstands beispielsweise mittels eines LIQUIPHANTEN, aus der Amplitude des Empfangs-Trägersignals oder aus der Phasenverschiebung zwischen dem Anrege-Trägersignal und dem Empfangs-Trägersignal berechnet werden. Die beiden Prozessgrößen sind mittels einer erfindungsgemäßen Vorrichtung vorteilhaft ohne wechselseitige Beeinflussung bestimmbar.

In einer bevorzugten Weiterbildung der Erfindung umfasst die Sensoreinheit zumindest eine mechanisch schwingfähige Einheit, insbesondere eine Schwinggabel, einen Einstab, oder eine Membran. Es kann sich aber auch um ein schwingfähig gehaltenes Rohr handeln. Die Vorrichtung ist also ein vibronischer Sensor, entweder ein Füllstandsmessgerät oder ein Durchflussmessgerät.

Es ist von Vorteil, wenn die Elektronikeinheit dazu ausgestaltet ist, einen vorgegebenen Füllstand, die Dichte oder die Viskosität des Mediums zu bestimmen und/oder zu überwachen. Die erste oder zweite Prozessgröße kann also insbesondere gegeben sein, durch einen vorgegebenen Füllstand, die Dichte oder die Viskosität.

In einer Ausgestaltung der Erfindung ist die Phasenverschiebung zwischen dem Anrege-Trägersignal und Empfangs-Trägersignal auf einen vorgebbaren Wert geregelt. Beispielsweise kann die vorgebbare Phasenverschiebung derart geregelt sein, dass die schwingfähige Einheit eine resonante Schwingung durchführt. Beispielsweise kann dies einer Phasenverschiebung von 90° entsprechen. Für die Bestimmung der Dichte ist es wiederum von Vorteil, die Phasenverschiebung derart zu regeln, dass sie dem sogenannten Viskositätsunabhängigkeitswinkel, das ist beispielsweise für einen LIQUIPHANTEN 45°, entspricht.

Eine besonders bevorzugte Ausgestaltung der Erfindung sieht vor, dass die Elektronikeinheit dazu ausgestaltet ist, aus der Phasenverschiebung zwischen dem Anrege-Modulationssignal und dem Empfangs-Modulationssignal eine Dämpfung zu ermitteln. Die Phasenverschiebung zwischen dem Anrege-Modulationssignal und dem Empfangs-Modulationssignal ist abhängig von der Anrege-Trägerfrequenz, der Anrege-Modulationsfrequenz und der Dämpfung. Da die ersten beiden Größen bekannt sind, kann also die Dämpfung bestimmt werden. Im Falle eines vibronischen Sensors ist die Dämpfung beispielsweise zusammengesetzt aus der inneren Dämpfung der schwingfähigen Einheit und der äußeren Dämpfung, welche durch die Schwingungsbewegung der schwingfähigen Einheit in einem Medium hervorgerufen wird. Die äußere Dämpfung hängt von der Viskosität des Mediums ab und kann entsprechend bei bekannter innere Dämpfung ermittelt werden. Umgekehrt lässt sich bei bekannter äußerer Dämpfung die innere Dämpfung ermitteln, welche vom Zustand des Sensors abhängt und auf das Auftreten von Ansatzbildung, Korrosion oder auch Alterungseffekten hinweisen kann. Nun ist es so, dass die innere Dämpfung üblicherweise klein im Verhältnis zur gesamten Dämpfung ist. Deshalb ist es vereinfachend ebenfalls möglich, die innere Dämpfung als Typwert zur Berechnung der äußeren Dämpfung heranzuziehen. In diesem Falle kann die Viskosität sogar ohne einen individuell zu bestimmenden Wert für die innere Dämpfung ermitteln.

Es ist entsprechend von Vorteil, wenn die Elektronikeinheit dazu ausgestaltet ist, aus der Dämpfung zumindest die Viskosität des Mediums zu ermitteln. In einer bevorzugten Ausgestaltung der Erfindung ist die Phasenverschiebung zwischen dem Anrege-Modulationssignal und Empfangs-Modulationssignal durch Einstellung der Anrege-Modulationsfrequenz auf 45° geregelt. Auf diese Weise lässt sich die Dämpfung mit reduziertem Rechenaufwand bestimmen, wie in Zusammenhang mit der Figurenbeschreibung noch erläutert werden wird.

Die erfindungsgemäße Aufgabe wird außerdem gelöst durch ein Verfahren zur Bestimmung und/oder Überwachung zumindest einer ersten Prozessgröße eines Mediums zumindest mit einer Elektronikeinheit und einer Sensoreinheit, wobei die Sensoreinheit mit einem Anregesignal beaufschlagt wird, welches zusammengesetzt wird aus einem Anrege-Trägersignal mit einer Anrege-Trägerfrequenz und einem Anrege-Modulationssignal mit einer Anrege-Modulationsfrequenz, wobei ein Empfangssignal empfangen wird, welches zusammengesetzt wird aus einem Empfangs-Trägersignal und einem Empfangs-Modulationssignal, und wobei aus der Phasenverschiebung zwischen dem Anrege-Modulationssignal und dem Empfangs-Modulationssignal zumindest die erste Prozessgröße bestimmt wird. Das erfindungsgemäße Verfahren ermöglicht also die Auswertung eines Empfangs-Trägersignals und eines Empfangs-Modulationssignals unabhängig voneinander. Die Modulation, erfindungsgemäß eine Amplitudenmodulation, beeinflusst eine Auswertung des Trägersignals nicht. Vorteilhaft ist die Anrege-Modulationsfrequenz klein gegen die Anrege-Trägerfrequenz.

Bei dem erfindungsgemäßen Verfahren wird aus dem Empfangs-Trägersignal zumindest eine zweite Prozessgröße bestimmt.

Es ist von Vorteil, wenn ein vorgegebener Füllstand des Mediums in dem Behälter oder den Durchfluss eines Mediums durch eine Rohrleitung bestimmt und/oder überwacht wird. Eine dieser Größen ist dann insbesondere die erste oder zweite Prozessgröße.

Eine Weiterbildung des erfindungsgemäßen Verfahrens sieht vor, dass die Phasenverschiebung zwischen dem Anrege-Trägersignal und Empfangs-Trägersignal auf einen vorgebbaren Wert geregelt wird. Der Wert der vorgebbaren Phasenverschiebung wird insbesondere derart gewählt, dass die schwingfähige Einheit resonante Schwingungen ausführt, oder derart, dass die vorgebbare Phasenverschiebung dem sogenannten Viskositätsunabhängigkeitswinkel entspricht.

Es ist von Vorteil, wenn aus der Phasenverschiebung zwischen dem Anrege-Modulationssignal und dem Empfangs-Modulationssignal eine Dämpfung bestimmt wird. Im Falle eines vibronischen Sensors ist die Dämpfung beispielsweise zusammengesetzt aus der inneren Dämpfung der schwingfähigen Einheit und der äußeren Dämpfung, welche durch die Schwingungsbewegung der schwingfähigen Einheit in einem Medium hervorgerufen wird.

Ebenso ist es von Vorteil wenn aus der Dämpfung zumindest die Viskosität des Mediums ermittelt wird. Somit lassen sich kontinuierlich ein vorgegebener Füllstand oder die Dichte und die Viskosität mittels eines vibronischen Füllstandsmessgeräts bestimmen. Die Möglichkeit, kontinuierlich einen vorgegebenen Füllstand und die Viskosität zu bestimmen bietet darüber hinaus gegenüber aus dem Stand der Technik üblichen Verfahren, wie eingangs beschrieben, den Vorteil, dass der Sensor nicht stetig erneut anschwingen muss. Somit kommt es im Vergleich zu diesen Methoden erst bei einer deutlich höheren Viskosität des Mediums zu einem Schwingungsabriss. Desweiteren ist bei der erfindungsgemäßen Lösung die eigentliche resonante Schwingung, das ist die durch das Anrege-Trägersignal hervorgerufene Schwingung, nicht durch die Modulationsschwingung, mittels welcher die Dichte bzw. die Viskosität bestimmt wird und welche durch das Anrege-Modulationssignal angeregt wird, beeinflusst.

Schließlich kann vorteilhaft die Phasenverschiebung zwischen dem Anrege-Modulationssignal und Empfangs-Modulationssignal durch Einstellung der Anrege-Modulationsfrequenz auf 45° geregelt werden. Dies führt zu einem reduzierten Rechenaufwand, wie im Zuge der nachfolgenden Figurenbeschreibung beschrieben wird.

Die Erfindung sowie ihre vorteilhaften Ausgestaltungen werden nachfolgend anhand der Figuren Fig. 1 - Fig. 4 näher beschrieben. Es zeigt:

Fig. 1: eine schematische Skizze eines vibronischen Sensors gemäß Stand der Technik,

Fig. 2: (a) das Anrege-Trägersignal als Funktion der Zeit, und (b) das Anrege-Trägersignal und das Empfangs-Trägersignal als Funktion der Zeit.

Fig. 3: ein Blockschaltbild einer erfindungsgemäßen Elektronikeinheit, und

Fig. 4 ein Blockschaltbild einer zweiten Ausgestaltung einer erfindungsgemäßen Elektronikeinheit.

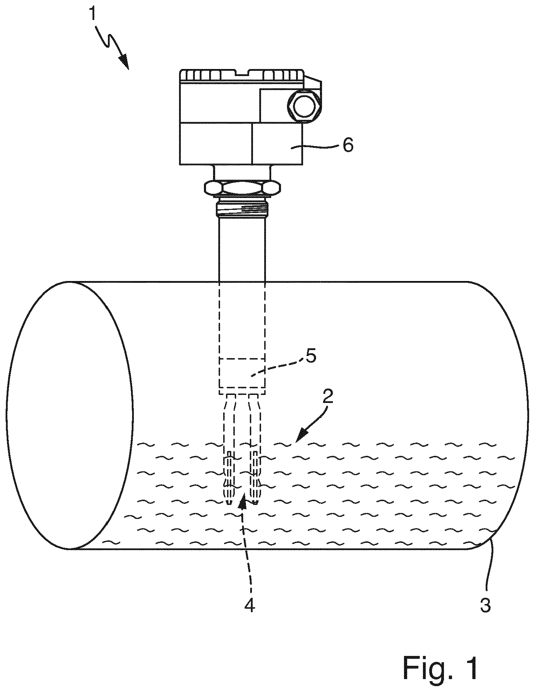

In Fig. 1 ist ein vibronisches Füllstandsmessgerät 1 gezeigt. Eine Sensoreinheit 2 mit einer mechanisch schwingfähigen Einheit 4 in Form einer Schwinggabel taucht teilweise in ein Medium 3 ein, welches sich in einem Behälter befindet. Die schwingfähige Einheit 4 wird mittels der Anrege- /Empfangseinheit 5 zu mechanischen Schwingungen angeregt, und kann beispielsweise ein piezoelektrischer Stapel- oder Bimorphantrieb sein. Es versteht sich jedoch von selbst, dass auch andere Ausgestaltungen eines vibronischen Füllstandsmessgeräts möglich sind. Weiterhin ist eine Elektronikeinheit 6 dargestellt, mittels welcher die Signalerfassung, -auswertung und/oder -speisung erfolgt.

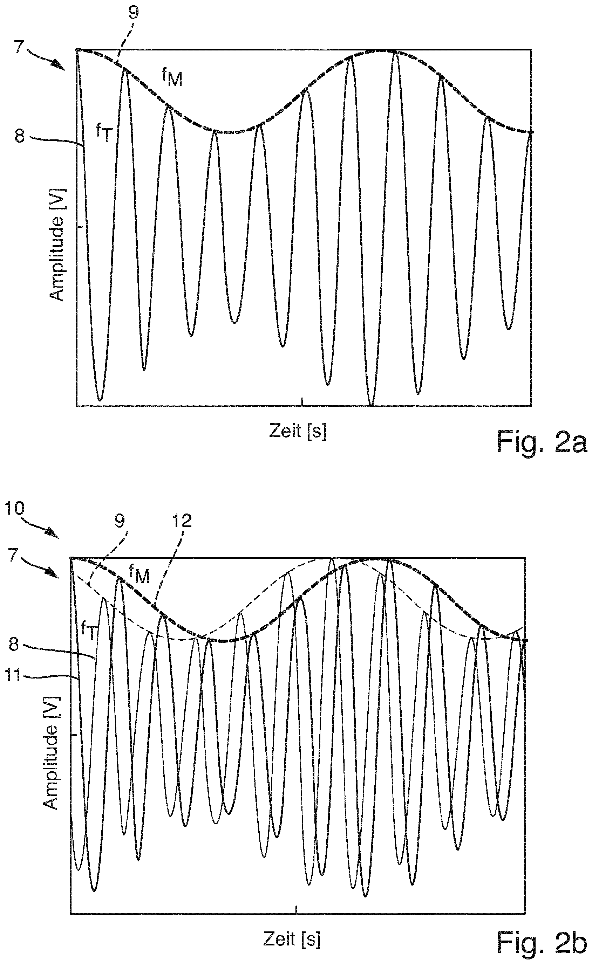

Das Anregesignal 7 zur Beaufschlagung der schwingfähigen Einheit 4 wird erfindungsgemäß zusammengesetzt aus einem Anrege-Trägersignal 8 und einem Anrege-Modulationssignal 9, und ist exemplarisch in Fig. 2a als Funktion der Zeit gezeigt. Das des Anrege-Modulationssignals 9 mit der Anrege-Modulationsfrequenz $f_M$ ist sichtbar als Einhüllende des Anrege-Trägersignals 8 mit der Anrege-Trägerfrequenz $f_T$. Das von der schwingfähigen Einheit 4 empfange Empfangssignal 10 ist in Fig. 2b zusammen mit dem Anregesignal 7 dargestellt, ebenfalls als Funktion der Zeit. Es ist ebenfalls zusammengesetzt aus zwei Teilen, dem Empfangs-Trägersignal 11 und dem Empfangs-Modulationssignal 12. Während sich die Frequenzen des Anrege-Trägersignals 8 und Anrege-Modulationssignals 9 nicht ändern, weist das Empfangssignal 10 eine von der Amplitude des Anregesignals 7 unterschiedliche Amplitude auf. Außerdem tritt zwischen dem Anregesignal 7 und dem Empfangssignal 10 eine Phasenverschiebung auf, sowohl in Bezug auf das Trägersignal (8,11) als auch in Bezug auf das Modulationssignal (9,12).

Im Folgenden soll skizziert werden, warum sich mittels der Amplitudenmodulation des Anregesignals 7 die Dämpfung der schwingfähigen Einheit 4 ermitteln lässt. Hierzu bedarf es einer mathematischen Beschreibung der Schwingungsbewegung der schwingfähigen Einheit 4. Je nachdem, welche Geometrie und welche Randbedingungen gewählt werden, lassen sich unterschiedliche Gleichungen aufstellen. Jedoch wird die Rechnung schnell ausgesprochen umfangreich, weswegen im Folgenden eine sehr vereinfachte Darstellung gewählt wird, nämlich die der schwingfähigen Einheit 4 als idealer gedämpfter harmonischer Oszillator mit der Übertragungsfunktion G(s):

$$G(s) = \frac{V}{\left(\frac{1}{\omega 0}\cdot s\right)^2 + 2\cdot D\cdot \frac{1}{\omega 0}\cdot s + 1} = \frac{V\cdot \omega 0^2}{(s - s1)\cdot (s - s2)}$$

Dabei beschreibt V die Verstärkung bei der Kreisfrequenz ω=0, D die Dämpfung, ω0 die Resonanzfrequenz im ungedämpften Fall und die Abkürzungen s1 und s2 sind im Schwingfall, das heißt im Falle, dass D<1 ist, gegeben durch:

$$s1 = \omega 0\cdot \left(i\cdot \sqrt{1 - D^2} - D\right) , \quad s2 = \omega 0\cdot \left(-i\cdot \sqrt{1 - D^2} - D\right)$$

Das Anregesignal 7 L(t), wie in Fig. 2a gezeigt, lässt sich mathematisch durch

$$L(t) = AmpC \cdot \cos(\omega C \cdot t) \cdot [(mo) \cdot \cos(\omega M \cdot t) + 1]$$

Beschreiben, wobei AmpC und $\omega C$ die Amplitude und die Frequenz des Trägersignals sind, und mo sowie $\omega M$ die Amplitude und die Kreisfrequenz des Modulationssignals sind.

Um die Systemantwort der schwingfähigen Einheit 4 auf das Anregesignal 7 zu berechnen, wird das Anregesignal 7 mittels einer Partialbruchzerlegung in drei Summanden zerlegt. Für jeden Summanden kann dann eine Laplace-Transformation durchgeführt und die Systemantwort einzeln errechnet werden. Für eine resonante Anregung, also für die Annahme dass $\omega C = \omega 0$, was implizit einer Phasenverschiebung zwischen dem Anrege-Trägersignal und Empfangs-Trägersignal von 90° entspricht, ergibt sich dann bei Vernachlässigung etwaiger Einschwingvorgänge die gesamte Systemantwort. Anhand der rücktransformierten Systemantwort lässt sich wiederum aus der komplexen Amplitude die Phasenverschiebung

$$\varphi = \operatorname{atan}\left(\frac{\operatorname{Imag}(G)}{\operatorname{Real}(G)}\right)$$

zwischen dem Anrege-Modulationssignal und dem Empfangs-Modulationssignal berechnen. Die Modulationsschwingung der Systemantwort GL_mod ergibt sich zu

$$GL\_mod(t) = C1 \cdot \left[ \frac{\left[\omega 0^2 - (\omega 0 - \omega M)^2 + 2 \cdot D \cdot \omega 0 \cdot (\omega 0 - \omega M)\right] \cdot (1 - i)}{\frac{\left[\omega 0^2 - (\omega 0 - \omega M)^2\right]^2}{\omega 0^2} + 4 \cdot D^2 \cdot (\omega 0 - \omega M)^2} + \frac{\left[\omega 0^2 - (\omega 0 + \omega M)^2 + 2 \cdot D \cdot \omega 0 \cdot (\omega 0 + \omega M)\right] \cdot (1 + i)}{4 \cdot D^2 \cdot (\omega 0 + \omega M)^2 + \frac{\left[(\omega 0 + \omega M)^2 - \omega 0^2\right]^2}{\omega 0^2}} \right] \cdot \cos(t \cdot \omega M)$$

mit $C1 = \frac{1}{2} \cdot V \cdot AmpC \cdot mo$ und die Phasenverschiebung zu ,

$$\varphi(D) := \operatorname{atan}\left[ \frac{2 \cdot \left[(D - 1) \cdot \omega M^4 + 4 \cdot \omega 0^2 \cdot \left(1 - D^3\right) \cdot \omega M^2 + 4 \cdot D^2 \cdot \omega 0^4 (D + 1)\right]}{\omega 0 \cdot \omega M \cdot \left[ \frac{-8 \cdot D^3 \cdot \omega 0^4}{\omega M^2} + \left(D^2 - \frac{3}{2} \cdot D - 1\right) \cdot 8D \, \omega 0^2 + \left(D^2 + \frac{3}{2} \cdot D - 1\right) \cdot \omega M^2 + \frac{\omega M^4}{\omega 0^2}\right]} \right]$$

Diese Gleichung lässt sich erheblich vereinfachen, wenn man annimmt das die Frequenz der Modulationsschwingung deutlich kleiner ist als die Resonanzfrequenz des Schwingsystems im ungedämpften Falle, also unter der Bedingung $\omega M \ll \omega 0$:

$$\varphi = \operatorname{atan}\left(-\frac{\omega M}{\omega 0 \cdot D}\right)$$

Durch Umformung erhält man für die Dämpfung der schwingfähigen Einheit bei resonanter Anregung

$$D = \frac{-\omega M}{\tan(\varphi) \cdot \omega 0}$$

Eine weitere Vereinfachung kann erzielt werden, wenn die Phasenverschiebung zwischen dem Anrege-Modulationssignal 9 und dem Empfangs-Modulationssignal 12 durch Einstellung der Anrege-Modulationsfrequenz auf 45° eingestellt wird; in diesem Falle berechnet sich die Dämpfung zu

$$D = \frac{\omega M}{\omega 0}$$

Für beliebige Frequenzen des Trägersignals ($\omega C \neq \omega 0$) wird die Rechnung komplizierter.

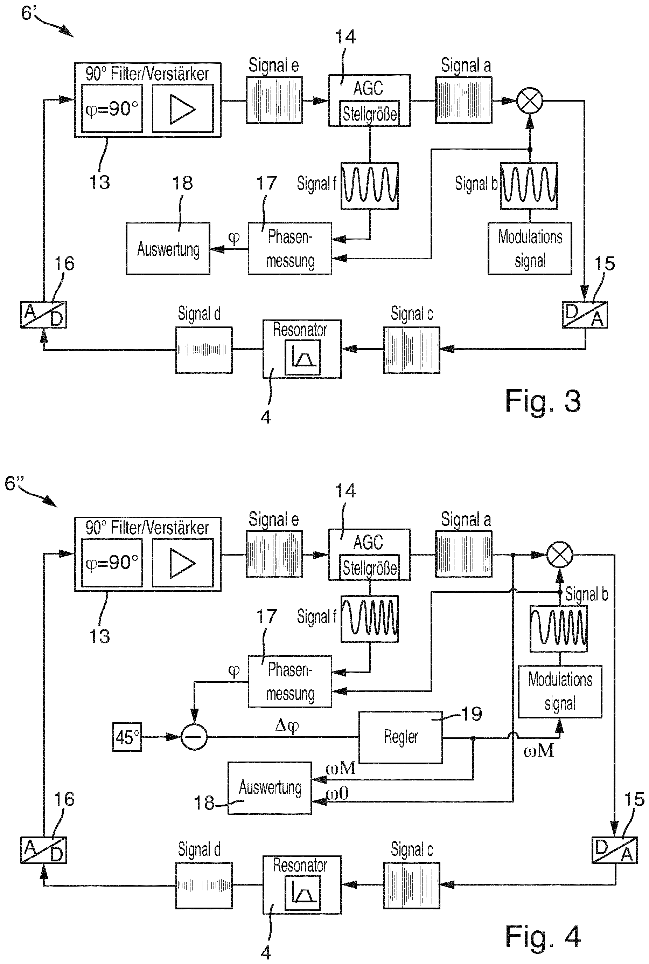

Die Figuren Fig. 3 und Fig. 4 zeigen schließlich zwei Blockschaltbilder mit zwei möglichen Ausgestaltungen für eine erfindungsgemäße Elektronikeinheit 6' und 6" eines vibronischen Füllstandsmessgeräts.

Bei der Ausführung wie in Fig. 3 gezeigt, wird die schwingfähige Einheit 4 mittels einer elektromechanischen Wandlereinheit 5 (nicht eingezeichnet) angeregt, welche Teil eines rückgekoppelten Schwingreises ist, für welchen die Phasenverschiebung zwischen dem Anrege-Trägersignal 8 und Empfangs-Trägersignal 10 mittels eines Filters (90°-Filter) und eines Verstärkers 13 und einer automatischen Verstärkerregelung (AGC) 14 eingestellt wird. Mit der Modulationsschwingung, welche gleichzeitig Stellgröße des Regelkreises ist, lässt sich die Dämpfung des Schwingsystems ermitteln.

Die Frequenz $f_T$ des Anrege-Trägersignals 8 bzw. der Trägerschwingung (Signal a) stellt sich innerhalb des Schwingkreises gemäß der Schwingkreisbedingung ein. Diesem Signal wird das Anrege-Modulationssignal 9 (Signal b) mit der Anrege-Modulationsfrequenz $f_M$ aufmoduliert. Daraus ergibt sich das gesamte Anregesignal c, mittels welchem die schwingfähige Einheit 4 nach Durchlaufen eines Digital-Analog-Wandlers 15 beaufschlagt wird. Das im Gegenzug von der schwingfähigen Einheit 4 empfangene Empfangssignal 10 (Signal d) ist bezüglich der Trägerfrequenz $f_T$ und der Modulationsfrequenz $f_M$ mit dem Anregesignal 7 (Signal c) identisch. Jedoch unterscheiden sich das Anregesignal 7 (Signal c) und das Empfangssignal 10 (Signal d) in ihren Amplituden. Außerdem liegt eine Phasenverschiebung zwischen beiden Signalen vor, sowohl in Bezug auf das Trägersignal 8,11 als in Bezug auf das Modulationssignal 9,12.

Nach Durchlaufen eines Analog-Digital-Wandlers 16 gelang das Empfangssignal 10 (Signal d) zu der Einheit aus dem 90°-Filter und dem Verstärker 13. Die Phasenverschiebung der Resonanzschwingung aufgrund des Trägersignals 8,11 wird durch den 90°-Filter 13 bestimmt und erzeugt in Resonanz für die schwingfähige Einheit 4 eine Phasenverschiebung von +90°. Die viel kleinere Modulationsschwingung 9,12 wird durch den Filter 13 jedoch nicht phasenverschoben. Innerhalb des AGC 14 wird das Empfangssignal 10 (Signal e) dann von der Modulationsschwingung 9,12 befreit und wird wieder zum Anrege-Trägersignal (Signal a). Signal e gelangt dann in die AGC und wird von der Modulationsschwingung befreit (Signal a). Die Stellgröße des AGC 14 (Signal f) beinhaltet nun ausschließlich das Empfangs-Modulationssignal 12 (Signal f). Die Phasenverschiebung zwischen dem Anrege-Modulationssignal 9 (Signal b) und dem Empfangs-Modulationssignal 12 (Signal f) wird durch einen Phasenmesser 17 ermittelt und einer Phasenauswerteeinheit 18 zugeführt, welche aus der Phasenverschiebung zwischen dem Anrege-Modulationssignal 9 (Signal b) und dem Empfangs-Modulationssignal 12 (Signal f) unter Berücksichtigung der Anrege-Modulationsfrequenz $f_M$ die Dämpfung ermittelt, und aus der Dämpfung beispielsweise die Viskosität.

Eine zweite Variante für eine erfindungsgemäße Elektronikeinheit 6" ist Gegenstand von Fig. 4. Der eigentliche Schwingkreis zur Gewährleistung resonanter Schwingungen der schwingfähigen Einheit 4 ist unverändert. Hierauf wird entsprechend im Folgenden nicht erneut eingegangen. Der Unterschied zu Fig. 3 besteht darin, dass die Anrege-Modulationsfrequenz $f_M$ nun einstellbar ist. Somit fließen nur noch die Kreisfrequenzen $\omega 0$ und $\omega M$ in die Auswertung mit ein. Außerdem sorgt, wie bereits erläutert, eine Phasenverschiebung zwischen dem Anrege-Modulationssignal 9 (Signal b) und dem Empfangs-Modulationssignal 12 (Signal f) von 45° zu einer vereinfachten Bestimmungsgleichung für die Viskosität. Deshalb ist neben der Phasenmessung 17 und der Phasenauswerteeinheit 18 zur Bestimmung der Phasenverschiebung zwischen dem Anrege-Modulationssignal 9 (Signal b) und dem Empfangs-Modulationssignal 12 (Signal f) weiterhin ein Phasenegelkreis 19 integriert, welchem eine einstellbare Sollphase (45°) vorgegeben werden kann. Über den Phasenregelkreis 19 wird die Anrege-Modulationsfrequenz $f_M$ derart eingestellt, dass die Phasenverschiebung zwischen dem Anrege-Modulationssignal 9 und dem Empfangs-Modulationssignal 11 45° beträgt. Aus der gemessenen Resonanzfrequenz $\omega 0$, welche der Anrege-Trägerfrequenz $f_T$ entspricht und der eingestellten Anrege-Modulationsfrequenz $\omega M$ ergibt sich dann die Dämpfung.

**Bezugszeichenliste**

1    Vibronischer Sensor
2    Medium
3    Behälter
4    Schwingfähige Einheit
5    Elektromechanische Wandlereinheit
6    Elektronikeinheit
7    Anregesignal

8     Anrege-Trägersignal
9     Anrege-Modulationssignal
10    Empfangssignal
11    Empfangs-Trägersignal
12    Empfangs-Modulationssignal
13    90°- Filter und Verstärker
14    AGC
15    D/A Wandler
16    A/D Wandler
17    Phasenmessung
18    Phasenauswerteeinheit
19    Phasenregeleinheit

$U_A$     Anregesignal
$U_E$     Empfangssignal
$f_M$     Anrege-Trägerfrequenz
$f_T$     Anrege-Modulationsfrequenz
D     Dämpfung
$\omega 0$     Resonanzfrequenz des ungedämpften Schwingers
$\omega M$     Frequenz der Modulation
$\omega C$     Trägerfrequenz
V     Verstärkung des Resonators bei $\omega=0$
AmpC    Anregeamplitude der Trägerfrequenz
Mo     Modulationsamplitude

## Patentansprüche

1. Vorrichtung zur Bestimmung und/oder Überwachung zumindest einer ersten Prozessgröße eines Mediums (3) zumindest mit einer Elektronikeinheit (4) und einer Sensoreinheit (2),
   wobei die Elektronikeinheit (6) dazu ausgestaltet ist,
   die Sensoreinheit (2) mit einem Anregesignal (7) zu beaufschlagen, welches zusammengesetzt ist aus einem Anrege-Trägersignal (8) mit einer Anrege-Trägerfrequenz ($f_T$) und einem Anrege-Modulationssignal (9) mit einer Anrege-Modulationsfrequenz ($f_M$),
   und ein Empfangssignal (10) von der Sensoreinheit (2) zu empfangen, welches zusammengesetzt ist aus einem Empfangs-Trägersignal (11) und einem Empfangs-Modulationssignal (12),
   wobei es sich um eine Amplitudenmodulation des Anregesignals (7) handelt,
   und wobei die Elektronikeinheit (6) dazu ausgestaltet ist, aus der Phasenverschiebung zwischen dem Anrege-Modulationssignal (9) und dem Empfangs-Modulationssignal (12) zumindest die erste Prozessgröße zu bestimmen, und
   aus dem Empfangs-Trägersignal (8) zumindest eine zweite Prozessgröße zu bestimmen.

2. Vorrichtung nach Anspruch 1,
   wobei die Sensoreinheit (2) zumindest eine mechanisch schwingfähige Einheit (4) umfasst, insbesondere eine Schwinggabel, einen Einstab, oder eine Membran.

3. Vorrichtung nach zumindest einem der vorhergehenden Ansprüche,
   wobei die Elektronikeinheit (6) dazu ausgestaltet ist, einen vorgegebenen Füllstand, die Dichte oder die Viskosität des Mediums (3) zu bestimmen und/oder zu überwachen.

4. Vorrichtung nach zumindest einem der vorhergehenden Ansprüche,
   wobei die Phasenverschiebung zwischen dem Anrege-Trägersignal (8) und Empfangs-Trägersignal (11) auf einen vorgebbaren Wert geregelt ist.

5. Vorrichtung nach zumindest einem der vorhergehenden Ansprüche,
   wobei die Elektronikeinheit (6) dazu ausgestaltet ist, aus der Phasenverschiebung zwischen dem Anrege-Modulationssignal (9) und dem Empfangs-Modulationssignal (12) eine Dämpfung zu ermitteln

6. Vorrichtung nach Anspruch 5, wobei die Elektronikeinheit (6) dazu ausgestaltet ist, aus der Dämpfung zumindest die Viskosität des Mediums (3) zu ermitteln.

7. Vorrichtung nach zumindest einem der vorhergehenden Ansprüche, wobei die Phasenverschiebung zwischen dem Anrege-Modulationssignal (9) und Empfangs-Modulationssignal (12) durch Einstellung der Anrege-Modulationsfrequenz ($f_M$) auf 45° geregelt ist.

8. Verfahren zur Bestimmung und/oder Überwachung zumindest einer ersten Prozessgröße eines Mediums (3) zumindest mit einer Elektronikeinheit (6) und einer Sensoreinheit (2), wobei die Sensoreinheit (2) mit einem Anregesignal (7) beaufschlagt wird, welches zusammengesetzt wird aus einem Anrege-Trägersignal (8) mit einer Anrege-Trägerfrequenz ($f_T$) und einem Anrege-Modulationssignal (9) mit einer Anrege-Modulationsfrequenz ($f_M$), wobei ein Empfangssignal (10) empfangen wird, welches zusammengesetzt wird aus einem Empfangs-Trägersignal (11) und einem Empfangs-Modulationssignal (12), wobei es sich um eine Amplitudenmodulation des Anregesignals (7) handelt, wobei aus der Phasenverschiebung zwischen dem Anrege-Modulationssignal (9) und dem Empfangs-Modulationssignal (12) die zumindest eine Prozessgröße bestimmt wird, und wobei aus dem Empfangs-Trägersignal (11) zumindest eine zweite Prozessgröße bestimmt wird.

9. Verfahren nach Anspruch 8, wobei ein vorgegebener Füllstand, die Dichte oder die Viskosität des Mediums (3) bestimmt und/oder zu überwacht wird.

10. Verfahren nach zumindest einem der Ansprüche 8 oder 9, wobei die Phasenverschiebung zwischen dem Anrege-Trägersignal (8) und Empfangs-Trägersignal (11) auf einen vorgebbaren Wert geregelt wird.

11. Verfahren nach zumindest einem der Ansprüche 8-10, wobei aus der Phasenverschiebung zwischen dem Anrege-Modulationssignal (9) und dem Empfangs-Modulationssignal (12) eine Dämpfung bestimmt wird.

12. Verfahren nach Anspruch 11, wobei aus der Dämpfung zumindest die Viskosität des Mediums (3) ermittelt wird.

13. Verfahren nach zumindest einem der Ansprüche 8-12, wobei die Phasenverschiebung zwischen dem Anrege-Modulationssignal (9) und Empfangs-Modulationssignal (12) durch Einstellung der Anrege-Modulationsfrequenz ($f_M$) auf 45° geregelt wird.

**Claims**

1. Apparatus designed to determine and/or monitor at least a first process variable of a medium (3), at least with an electronics unit (4) and a sensor unit (2), wherein the electronics unit (6) is designed to supply the sensor unit (2) with an excitation signal (7), said signal consisting of an excitation carrier signal (8) with an excitation carrier frequency ($f_T$) and an excitation modulation signal (9) with an excitation modulation frequency ($f_M$), and to receive a reception signal (10) from the sensor unit (2), said signal consisting of a reception carrier signal (11) and a reception modulation signal (12), wherein the procedure involves an amplitude modulation of the excitation signal (7), and wherein the electronics unit (6) is designed to determine at least the first process variable from the phase shift between the excitation modulation signal (9) and the reception modulation signal (12), and at least a second process variable from the reception carrier signal (11).

2. Apparatus as claimed in Claim 1, wherein the sensor unit (2) comprises at least a unit capable of vibrating mechanically (4), particularly a tuning fork, a single rod or a membrane.

3. Apparatus as claimed in at least one of the previous claims, wherein the electronics unit (6) is designed to determine and/or monitor a predefined level, the density or the viscosity of the medium (3).

4. Apparatus as claimed in at least one of the previous claims, wherein the phase shift between the excitation carrier signal (8) and the reception carrier signal (11) is regulated to a predefinable value.

5.  Apparatus as claimed in at least one of the previous claims,
    wherein the electronics unit (6) is designed to determine a damping from the phase shift between the excitation modulation signal (9) and the reception modulation signal (12).

6.  Apparatus as claimed in Claim 5,
    wherein the electronics unit (6) is designed to determine the viscosity of the medium (3) from the damping.

7.  Apparatus as claimed in at least one of the previous claims,
    wherein the phase shift between the excitation modulation signal (9) and the reception modulation signal (12) is regulated to 45° by setting the excitation modulation frequency ($f_M$).

8.  Procedure designed to determine and/or monitor at least a first process variable of a medium (3), at least with an electronics unit (6) and a sensor unit (2),
    wherein the sensor unit (2) is supplied with an excitation signal (7) which is composed of an excitation carrier signal (8) with an excitation carrier frequency (fr) and an excitation modulation signal (9) with an excitation modulation frequency ($f_M$),
    wherein a reception signal (10) is received which comprises a reception carrier signal (11) and a reception modulation signal (12),
    wherein the procedure involves an amplitude modulation of the excitation signal (7), wherein the at least one process variable is determined from the phase shift between the excitation modulation signal (9) and the reception modulation signal (12), and
    at least a second process variable is determined from the reception carrier signal (11).

9.  Procedure as claimed in Claim 8,
    wherein a predefined level, the density or the viscosity of the medium (3) is determined and/or monitored.

10. Procedure as claimed in at least one of the Claims 8 or 9,
    wherein the phase shift between the excitation carrier signal (8) and the reception carrier signal (11) is regulated to a predefinable value.

11. Procedure as claimed in at least one of the Claims 8 to 10,
    wherein a damping is determined from the phase shift between the excitation modulation signal (9) and the reception modulation signal (12).

12. Procedure as claimed in at least Claim 11,
    wherein at least the viscosity of the medium (3) is determined from the damping.

13. Procedure as claimed in at least one of the Claims 8 to 12,
    wherein the phase shift between the excitation modulation signal (9) and the reception modulation signal (12) is regulated to 45° by setting the excitation modulation frequency ($f_M$).

**Revendications**

1.  Dispositif destiné à la détermination et/ou à la surveillance d'au moins une première grandeur process d'un produit (3), au minimum avec une unité électronique (4) et une unité de capteur (2),
    l'unité électronique (6) étant conçue pour alimenter l'unité de capteur (2) avec un signal d'excitation (7), lequel signal est composé d'un signal porteur d'excitation (8) avec une fréquence porteuse d'excitation ($f_T$) et d'un signal de modulation d'excitation (9) avec une fréquence de modulation d'excitation ($f_M$),
    et à recevoir un signal de réception (10) par l'unité de capteur (2), lequel signal est composé d'un signal porteur de réception (11) et d'un signal de modulation de réception (12),
    procédé pour lequel il s'agit d'une démodulation d'amplitude du signal d'excitation (7),
    et l'unité électronique (6) étant conçue pour déterminer au moins la première grandeur process à partir du déphasage entre le signal de modulation d'excitation (9) et le signal de modulation de réception (12), et
    au moins une deuxième grandeur process à partir du signal porteur de réception (11).

**2.** Dispositif selon la revendication 1,
pour lequel l'unité de capteur (2) comprend au moins une unité apte à vibrer mécaniquement (4), notamment une fourche vibrante, une monotige ou une membrane.

**3.** Dispositif selon au moins l'une des revendications précédentes,
pour lequel l'unité électronique (6) est conçue pour déterminer et/ou surveiller un niveau prédéfinissable, la densité ou la viscosité du produit (3).

**4.** Dispositif selon au moins l'une des revendications précédentes,
pour lequel le déphasage entre le signal porteur d'excitation (8) et le signal porteur de réception (11) est réglé à une valeur prédéfinissable.

**5.** Dispositif selon au moins l'une des revendications précédentes,
pour lequel l'unité électronique (6) est conçue de telle sorte à déterminer un amortissement à partir du déphasage entre le signal de modulation d'excitation (9) et le signal de modulation de réception (12).

**6.** Dispositif selon la revendication 5,
pour lequel l'unité électronique (6) est conçue pour déterminer la viscosité du produit (3) à partir de l'amortissement.

**7.** Dispositif selon au moins l'une des revendications précédentes,
pour lequel le déphasage entre le signal de modulation d'excitation (9) et le signal de modulation de réception (12) est obtenu par le réglage de la fréquence de modulation d'excitation ($f_M$) à 45°.

**8.** Procédé destiné à la détermination et/ou à la surveillance d'au moins une première grandeur process d'un produit (3), au minimum avec une unité électronique (6) et une unité de capteur (2),
l'unité de capteur (2) étant alimentée avec un signal d'excitation (7), lequel est composé d'un signal porteur d'excitation (8) avec une fréquence porteuse d'excitation ($f_T$) et d'un signal de modulation d'excitation (9) avec une fréquence de modulation d'excitation ($f_M$),
un signal de réception (10) étant reçu, lequel est composé d'un signal porteur de réception (11) et d'un signal de modulation de réception (12),
procédé pour lequel il s'agit d'une démodulation d'amplitude du signal d'excitation (7), l'au moins une grandeur process étant déterminée à partir du déphasage entre le signal de modulation d'excitation (9) et le signal de modulation de réception (12), et
au moins une deuxième grandeur process étant déterminée à partir du signal porteur de réception (11).

**9.** Procédé selon la revendication 8,
pour lequel un niveau prédéfini, la densité ou la viscosité du produit (3) est déterminé et/ou surveillé.

**10.** Procédé selon au moins l'une des revendications 8 ou 9,
pour lequel le déphasage entre le signal porteur d'excitation (8) et le signal porteur de réception (11) est réglé sur une valeur prédéfinissable.

**11.** Procédé selon au moins l'une des revendications 8 à 10,
pour lequel un amortissement est déterminé à partir du déphasage entre le signal de modulation d'excitation (9) et le signal de modulation de réception (12).

**12.** Procédé selon au moins la revendication 11,
pour lequel au moins la viscosité du produit (3) est déterminée à partir de l'amortissement.

**13.** Procédé selon au moins l'une des revendications 8 à 12,
pour lequel le déphasage entre le signal de modulation d'excitation (9) et le signal de modulation de réception (12) est obtenu par un réglage de la fréquence de modulation d'excitation ($f_M$) à 45°.

Fig. 1

Fig. 2a

Fig. 2b

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004050494A1
- US 5373745 A
- DE 102006034105 A1
- DE 102007013557 A1
- DE 102005015547 A1
- DE 102009026685 A1
- DE 102009028022 A1
- DE 102010030982 A1
- DE 00102010030982 A1
- DE 10050299 A1
- DE 102006033819 A1
- DE 102007043811 A1
- DE 10057974 A1